# EUROPÄISCHE PATENTSCHRIFT

(11) **EP 1 544 639 B1**
(45) Veröffentlichungstag und Bekanntmachung des Hinweises auf die Patenterteilung: **16.04.2008**
(21) Anmeldenummer: 04029840.8
(22) Anmeldetag: 16.12.2004
(51) Int. Cl.: G01S 3/782, G01S 17/95, G01S 17/88

(54) **Verfahren zum Erkennen von sich hinter einem Flugzeug bildenden Kondensstreifen**
Method for detecting contrail formation aft of an aircraft
Méthode de détection de la formation d'une traînée de condensation derrière un avion

(30) Priorität: 18.12.2003 DE 10359868
(43) Veröffentlichungstag der Anmeldung: 22.06.2005
(73) Patentinhaber: Deutsches Zentrum für Luft- und Raumfahrt e.V., 51147 Köln (DE)
(72) Erfinder: Mannstein, Hermann, Dr., 82205 Gilching (DE)
(74) Vertreter: von Kirschbaum, Albrecht

(56) Entgegenhaltungen:
- US-A- 5 285 256
- US-A- 5 546 183
- WEISS J M ET AL: "Automatic contrail detection and segmentation" IEEE TRANSACTIONS ON GEOSCIENCE AND REMOTE SENSING IEEE USA, Bd. 36, Nr. 5, September 1998 (1998-09), Seiten 1609-1619, XP002371293 ISSN: 0196-2892

## Beschreibung

Die Erfindung betrifft ein Verfahren zum Erkennen von sich hinter einem Flugzeug bildenden Kondensstreifen, wobei mittels einer im hinteren Bereich des Flugzeugs angebrachten, im sichtbaren und/oder im infraroten Spektralbereich empfindlichen Kamera aufgenommene Bilddaten in einen Computer eingegeben, von diesem erfasst und ausgewertet werden.

Ein derartiges Verfahre ist beispielsweise in US 5,285,256 beschrieben.

Es ist bekannt, dass die im Nachlauf von Flugzeugen bei entsprechender Lufttemperatur und -feuchte der Umgebung sich bildenden Kondensstreifen einen zusätzlichen, erwärmenden Treibhauseffekt verursachen, der in seiner Größenordnung mit dem Effekt von bei der Verbrennung entstehendem CO₂ vergleichbar ist.

Nachdem der Flugverkehr unter allen Verkehrsarten die höchsten Zuwachsraten aufweist, wird sein Anteil an der globalen Erwärmung in Zukunft noch steigen und somit auch der öffentliche und politische Druck, Maßnahmen zur Verringerung der Auswirkungen des Flugverkehrs auf das Klima zu ergreifen.

Nachdem der moderne Anteil an den derzeitigen Luftflotten bereits hochgradig auf Treibstoffeffizienz optimiert ist, sind in diesem Bereich nur relativ geringe und - durch den langwierigen Entwicklungszyklus im Flugzeugbau bedingt - langsame Veränderungen zu erwarten.

Die Vermeidung von Kondensstreifen, was oft schon durch eine relativ geringe Veränderung der Flughöhe oder -strecke erreichbar ist, da beide Möglichkeiten beispielsweise bereits zur Vermeidung von starken Turbulenzen bei Gewittern und anderen atmosphärischen Störungen angewendet werden, bietet hier ein Potential, relativ günstig und vergleichsweise schnell, zumindest einen Teil der Klimawirkung des Flugverkehrs zu reduzieren.

Eine direkte Beobachtung von Kondensstreifen aus dem verursachenden Flugzeug heraus scheint zur Zeit in der Praxis nicht stattzufinden. Zwar ist es möglich, über präzise Messungen der Temperatur, des statischen Luftdruckes und vor allem des Wasserdampfgehaltes der Umgebungsluft sowie der Treibstoffeffizienz auf die aus der Theorie bekannten Bedingungen zur Kondensstreifenbildung zu schließen; derzeit sind die erforderlichen Messgenauigkeiten jedoch nur mit relativ hohem Aufwand zu erreichen.

Aufgabe der Erfindung ist es daher, zur Vermeidung von Kondensstreifen ein Verfahren anzugeben, um bereits während eines Flugs zu erkennen und gegebenenfalls quasi in Echtzeit anzuzeigen, ob sich Kondensstreifen bilden und ob diese gegebenenfalls über einen längeren Zeitraum bestehen bleiben.

Gemäß der Erfindung werden bei dem gattungsgemäßen Verfahren zum Erkennen von sich hinter einem Flugzeug bildenden Kondensstreifen Teile eines aufgenommenen Bildes, die aufgrund der Abbildungsgeometrie einen ausgebildeten Kondensstreifen zeigen müssten, mittels eines Bildverarbeitungsverfahrens mit Bildteilen des Bildes verglichen werden, die den eigenen Kondensstreifen nicht beinhalten können, wobei durch das Bildverarbeitungsverfahren, wenn verfügbar auch in Kombination mit Messwerten von Außentemperatur und Außenfeuchte, unterschieden wird
a) kein/keine Kondensstreifen,
b) ein kurzlebiger oder mehrere kurzlebige Kondensstreifen,
c) ein persistenter, langlebiger oder mehrere persistente, langlebige Kondensstreifen und/oder
d) keine Erkennung möglich.

Vorteilhafte Weiterbildungen des erfindungsgemäßen Verfahrens sind Gegenstand von Ansprüchen 2 bis 10.

Möglichst hoch am Heck eines Flugzeugs an einer geeigneten Stelle, beispielsweise am oberen Ende des Seitenleitwerks ist eine im sichtbaren und/oder im infraroten Spektralbereich empfindliche Kamera, wie beispielsweise eine miniaturisierte Videokamera, mit entsprechend ausgelegter Optik, welche gegen Umwelteinflüsse und weitgehend gegen direkte Sonneneinstrahlung geschützt ist, so installiert, dass sich im Blickfeld vorzugsweise einer miniaturisierten Videokamera ein oder mehrere sich möglicherweise hinter dem Flugzeug bildende Kondensstreifen bis zum Horizont erfassen lassen.

Hierbei ist eine Kamera vorzusehen, mit welcher durch Wahl von Belichtungszeit und Blende auch nachts bei Sternenlicht interpretierbare Bilder aufgenommen werden können. Die mittels der Kamera aufgenommenen Bilder werden über entsprechend ausgelegte Leitungen in einen Computer eingegeben, von welchem Belichtungs- und Blendeneinstellungen u.ä. der Kamera vorzugsweise einer miniaturisierten Videokamera gesteuert sowie gegebenenfalls eine Erfassung und Auswertung der aufgenommenen Bilder vorgenommen werden.

Gemäß der Erfindung werden Teile eines aufgenommenen Bildes, die aufgrund der Abbildungsgeometrie den erzeugten Kondensstreifen zeigen müssten, mittels eines Bildverarbeitunsgverfahrens mit entsprechenden Bildteilen des Bildes vergleichen, die den eigenen Kondensstreifen nicht beinhalten können. Hierbei unterscheidet das verwendete Bildverarbeitungsverfahren, bei welchem, falls verfügbar, Messwerte von Außentemperatur und/oder Außenfeuchte eingebunden werden, zwischen
a) kein oder keine Kondensstreifen,
b) ein oder mehrere kurzlebige Kondensstreifen,
c) eine oder mehrere persistente, langlebige Kondensstreifen und/oder
d) keine Erkennung möglich.

Zweckmäßigerweise wird/werden als erstes ein aufgenommenes Bild oder aufgenommene Bilder bezüglich der Lage des Horizonts durch Verschiebung und Drehung normalisiert.

Darüber hinaus können gemäß einer vorteilhaften Ausgestaltung der Erfindung mittels eines geeigneten Mustererkennungsverfahrens die erfassten Bilder auf die typische Form und Struktur der Abbildung eines Kondensstreifens unter Berücksichtigung unterschiedlicher Beleuchtungsrichtungen untersucht werden. Ferner können die erfassten Bilder auch unter Berücksichtigung unterschiedlicher Beleuchtungsrichtungen untersucht werden.

Gemäß einer bevorzugten Weiterbildung des erfindungsgemäßen Verfahrens können mittels eines entsprechend angepassten Mikroprozessors sowohl die Steuerung beispielsweise einer miniaturisierten Videokamera als auch die anschließende Bildverarbeitung durchgeführt werden.

Das Ergebnis einer Auswertung kann vorzugsweise in stark reduzierter Form, beispielsweise durch Anzeigen mittels farbiger Lampen oder durch Integrieren in ein digitales Displaysystem dem/den Piloten bekannt gegeben werden. Ferner kann eine sich ergebende weitere Kondensstreifenbildung überwacht, gegebenenfalls erfasst und/oder auch ausgewertet werden.

Gleichzeitig können dieselben Informationen/Daten über eine funktechnische Datenübertragung, wie sie bereits in vielen Flugzeugen vorgesehen ist, an eine zentrale Stelle übermittelt und ausgewertet werden, um dort beispielsweise für die Flugroutenplanung nachfolgender Flugzeuge verwendet werden zu können.

Ferner können gemäß einer vorteilhaften Ausgestaltung der Erfindung die erfassten Bilddaten auf einem geeigneten Trägermedium zusammen mit anderen Informationen, wie beispielsweise Position, Druck, Außentemperatur und Außenfeuchte gespeichert werden, um zu einem späteren Zeitpunkt ausgewertet zu werden. Natürlich können die mittels beispielsweise einer miniaturisierten Videokamera aufgenommenen Bilder auch direkt auf einen Monitor ins Cockpit oder auch in den Passagierraum übertragen werden.

Um eine höhere Genauigkeit bei der Bestimmung der Länge des Kondensstreifens zu erreichen, können zwei oder mehr gegebenenfalls unterschiedliche Kameratypen an verschiedenen Stellen des Flugzeuges installiert und zeitlich koordiniert betrieben werden, um bei der Bildverarbeitung mit Hilfe bekannter Stereotechniken die Länge der Kondensstreifen zu ermitteln, oder beispielsweise durch einen Rückstreulaser die Entfernung zu den sichtbaren Teilen des Kondensstreifens zu messen.

Feuchte Schichten, in denen sich bevorzugt Kondensstreifen bilden, heben sich bei geeigneten Beleuchtungsbedingungen gegenüber dem Hintergrund ab, da sich dort oft schon natürliche oder von anderen Flugzeugen verursachte Zirren befinden. Mittels einer weiteren Bildverarbeitung ist es in diesen Fallen möglich, die relative Lage dieser Schichten in bezug auf das Flugniveau zu bestimmen, um so zusätzliche Information zur Wahl eines optimalen Flugniveaus bereitzustellen.

Eine bevorzugte Einsatzmöglichkeit des erfindungsgemäßen Verfahrens ist das Gebiet der Zivilluftfahrt. Es ist damit zu rechnen, dass in nicht allzu ferner Zukunft regulative Maßnahmen ergriffen werden, um die Auswirkungen der Luftfahrt auf das Klima zu mindern. Grosse Luftfahrtgesellschaften haben aus Gründen der Außendarstellung bereits heute Interesse bekundet, sich umweltfreundlich zu zeigen. Somit besteht das Potential, einen erheblichen Teil der Verkehrsflugzeuge mit einer Anlage zur Erkennung und Anzeige von Kondensstreifen auszustatten.

Da das vorstehend beschriebene Verfahren zum überwiegenden Teil aus bereits im Flugzeugbau Verwendung findenden, handelsüblichen Mitteln realisiert werden kann, sollte sich bei entsprechender Bewertung des Klimaeffektes der Kondensstreifen und insbesondere des Einsparungspotentials ein günstiges Kosten/Nutzen-Verhältnis erreichen lassen.

## Patentansprüche

1. Verfahren zum Erkennen von sich hinter einem Flugzeug bildenden Kondensstreifen, wobei mittels einer im hinteren Bereich des Flugzeugs angebrachten, im sichtbaren und/oder im infraroten Spektralbereich empfindlichen Kamera aufgenommene Bilddaten in einen Computer eingegeben, von diesem erfasst und ausgewertet werden, **dadurch gekennzeichnet, dass** Teile eines aufgenommenen Bildes, die aufgrund der Abbildungsgeometrie einen ausgebildeten Kondensstreifen zeigen müssten, mittels eines Bildverarbeitungsverfahrens mit Bildteilen des Bildes verglichen werden, die den eigenen Kondensstreifen nicht beinhalten können, wobei durch das Bildverarbeitungsverfahren, wenn verfügbar auch in Kombination mit Messwerten von Außentemperatur und Außenfeuchte, unterschieden wird
a) kein/keine Kondensstreifen,
b) ein kurzlebiger oder mehrere kurzlebige Kondensstreifen,
c) ein persistenter, langlebiger oder mehrere persistente, langlebige Kondensstreifen und/oder
d) keine Erkennung möglich.

2. Verfahren nach Anspruch 1, **dadurch gekennzeichnet, dass** durch Verschieben und Drehen eines aufgenommenen Bildes dieses bezüglich der Lage des Horizonts normalisiert wird.

3. Verfahren nach Anspruch 1 und/oder 2, **dadurch gekennzeichnet, dass** beim Auswerten die erfassten Bilddaten mittels eins Mustererkennungsverfahrens hinsichtlich Form und/oder Struktur der Abbildung eines Kondensstreifens untersucht werden.

4. Verfahren nach einem der vorhergehenden Ansprüche, **dadurch gekennzeichnet, dass** die erfassten Bilddaten auch unter Berücksichtigung unterschiedlicher Beleuchtungseinrichtungen untersucht werden.

5. Verfahren nach einem der vorhergehenden Ansprüche, **dadurch gekennzeichnet, dass** das Ergebnis einer Auswertung der erfassten Bilddaten in stark reduzierter Form angezeigt wird.

6. Verfahren nach einem der vorhergehenden Ansprüche, **dadurch gekennzeichnet, dass** das Ergebnis einer Auswertung der erfassten Bilddaten auf mindestens einem Monitor dem/den Piloten angezeigt wird.

7. Verfahren nach einem der vorhergehenden Ansprüche, **dadurch gekennzeichnet, dass** das Ergebnis einer Auswertung der erfassten Bilddaten per Funk an eine Bodenzentrale übertragen wird.

8. Verfahren nach einem der vorhergehenden Ansprüche, **dadurch gekennzeichnet, dass** die erfassten Bilddaten und/oder das Auswerteergebnis auf einem Trägermedium zusammen mit weiteren Informationen, wie Position, Luftdruck, Temperatur, Feuchte u.ä. gespeichert werden.

9. Verfahren nach einem der vorhergehenden Ansprüche, **dadurch gekennzeichnet, dass** die aufgenommenen Bilder als solche direkt auf einen Monitor oder auf Monitoren ins Cockpit und/oder den Passagierraum übertragen werden.

10. Verfahren nach einem der vorhergehenden Ansprüche, **dadurch gekennzeichnet, dass** bei geeigneten Beleuchtungsbedingungen gegenüber dem Hintergrund der sich bevorzugt in feuchten Schichten bildenden Kondensstreifen mittels weiterer Bildverarbeitungsverfahren die relative Lage dieser Schichten bezüglich des Flugniveaus bestimmt wird.

## Claims

1. A method for the detection of contrail formation aft of an airplane, wherein image data, captured by means of a camera mounted in the rear part of the airplane and being sensitive in the visible and/or the infrared spectral range, are inputted into a computer, collected and evaluated by the same, **characterized in that**, using an image processing method, parts of an image captured that, due to the imaging geometry, should show a contrail formed are compared to image parts of the image that can not include the own contrail, wherein, if available also in combination with measured values for the outside temperature and the outside humidity, the image processing method differentiates by
a) no contrail/contrails,
b) a transitory or a plurality of transitory contrail,
c) a persistent, lasting contrail or a plurality of persistent, lasting contrails, and/or
d) no detection possible.

2. The method of claim 1, **characterized in that** a captured image normalized with respect to the position of the horizon by shifting and rotating the image.

3. The method of claim 1 and/or claim 2, **characterized in that**, upon evaluation, the image data collected are examined with respect to the shape and/or structure of the image of a contrail using a pattern recognition method.

4. The method of one of the preceding claims, **characterized in that** the image data collected are also analyzed with consideration to different lighting means.

5. The method of one of the preceding claims, **characterized in that** the result of an evaluation of the image date collected is displayed in a highly reduced form.

6. The method of one of the preceding claims, **characterized in that** the result of an evaluation of the collected image date is displayed to the pilot/pilots on at least one display screen.

7. The method of one of the preceding claims, **characterized in that** the result of an evaluation of the collected image data is transmitted to a ground control centre by radio.

8. The method of one of the preceding claims, **characterized in that** the image date collected and/or the evaluation result are stored on a carrier medium together with other information such as position, air pressure, temperature, humidity, and the like.

9. The method of one of the preceding claims, **characterized in that** the images captured as such are transmitted directly to a monitor or monitors in the cockpit and/or the passenger cabin.

10. The method of one of the preceding claims, **characterized in that**, given suitable lighting conditions with respect to the background of the contrails preferably forming in humid layers, the relative position of these layers with respect to the flight level is determined using further image processing methods.

## Revendications

1. Procédé de détection de la formation d'une traînée de condensation derrière un avion, moyennant quoi, au moyen d'une caméra disposée dans la partie arrière de l'avion, sensible dans la région spectrale visible et/ou infrarouge, les données-image prises sont entrées dans un ordinateur, saisies et évaluées par celui-ci, **caractérisé en ce que** les parties d'une image saisie, qui, en raison de la géométrie de représentation, montrent la formation d'une traînée de condensation, sont comparées à l'aide d'un procédé de traitement d'image à des parties d'image qui ne peuvent contenir la traînée de condensation proprement dite, moyennant quoi, grâce au procédé de traitement d'image, lorsque celui-ci est disponible également en combinaison avec les valeurs de mesure de la température extérieure et de l'humidité extérieure, on procède à la constatation
a) de l'absence de traînée de condensation,
b) de la présence d'une traînée de condensation brève ou de plusieurs traînées de condensation brèves,
c) d'une traînée de condensation persistante, de longue durée, ou de plusieurs traînées de condensation persistantes et de longue durée et/ou
d) aucune constatation n'est possible.

2. Procédé selon la revendication 1, **caractérisé en ce que**, par décalage et rotation d'une image saisie, celle-ci est normalisée par rapport à la position de l'horizon.

3. Procédé selon la revendication 1 et/ou 2, **caractérisé en ce que**, pour l'évaluation, les données d'image saisies au moyen d'un procédé de reconnaissance d'échantillon sont examinées quant à la forme et/ou la structure de la représentation d'une traînée de condensation.

4. Procédé selon l'une des revendications précédentes, **caractérisé en ce que** les données d'image saisies sont également examinées pour prendre en considération différents dispositifs d'éclairage.

5. Procédé selon l'une des revendications précédentes, **caractérisé en ce que** le résultat d'une évaluation des données d'image saisies est affiché dans une forme fortement réduite.

6. Procédé selon l'une des revendications précédentes, **caractérisé en ce que** le résultat d'une évaluation des données d'image saisies est affiché sur au moins un écran du ou des pilotes.

7. Procédé selon l'une des revendications précédentes, **caractérisé en ce que** le résultat d'une évaluation des données d'image saisies est transmis par radio à un poste au sol.

8. Procédé selon l'une des revendications précédentes, **caractérisé en ce que** les données d'image saisies et/ou le résultat d'évaluation sont mémorisés sur un support conjointement avec d'autres informations, telles que la position, la pression d'air, la température, l'humidité, etc.

9. Procédé selon l'une des revendications précédentes, **caractérisé en ce que** les images saisies sont transmises telles quelles directement sur un écran ou sur des écrans dans le cockpit et/ou dans le compartiment passagers.

10. Procédé selon l'une des revendications précédentes, **caractérisé en ce que**, dans le cas de conditions d'éclairage appropriées par rapport à l'arrière-plan ou fond des traînées de condensation qui se forment de préférence dans les couches humides, on détermine, au moyen d'autres procédés de traitement d'image, la position relative de ces couches par rapport au niveau de vol.
